Europäisches Patentamt

**(19)** European Patent Office

Office européen des brevets

**(11)** Numéro de publication: **0 107 558**
**B1**

**(12)** FASCICULE DE BREVET EUROPEEN

**(45)** Date de publication du fascicule du brevet: **01.06.88**   **(51)** Int. Cl.⁴: **E 04 C 5/06,** F 24 D 3/00

**(21)** Numéro de dépôt: **83401953.1**

**(22)** Date de dépôt: **06.10.83**

**(54)** Structure à treillis, agrafe-support utilisée avec cette structure et installation de chauffage les incorporant.

**(30)** Priorité: **22.10.82 FR 8217709**
**22.10.82 FR 8217710**
**22.10.82 FR 8217711**

**(43)** Date de publication de la demande:
**02.05.84 Bulletin 84/18**

**(45)** Mention de la délivrance du brevet:
**01.06.88 Bulletin 88/22**

**(84)** Etats contractants désignés:
**AT BE CH DE GB LI LU NL**

**(56)** Documents cités:
**EP-A-0 044 985**
**CH-A- 595 596**
**DE-A-2 807 446**
**DE-A-2 910 612**
**DE-A-2 930 975**
**DE-A-3 015 534**
**DE-A-3 028 102**
**FR-A- 495 327**
**FR-A-1 548 501**
**FR-A-2 134 386**
**FR-A-2 391 010**
**GB-A- 221 292**

**(73)** Titulaire: **REHAU AG + Co**
**Rheniumhaus**
**D-8673 Rehau (DE)**

**(72)** Inventeur: **Elles, Yves Michel Robert**
**18 Chemin du Moulin**
**F-57320 Bouzonville (FR)**

**(74)** Mandataire: **Bourgognon, Jean-Marie et al**
**Cabinet Flechner 22, Avenue de Friedland**
**F-75008 Paris (FR)**

Courier Press, Leamington Spa, England.

# Description

La présente invention concerne des structures métalliques à treillis, des agrafes-supports utilisées avec ces structures et des installations de chauffage des bâtiments incorporant ces structures.

Une installation de chauffage de bâtiments par le sol dite "à pose humide" comprend généralement de bas en haut une dalle, une isolation thermique et phonique, une pellicule protectrice, un treillis métallique muni d'agrafes-supports destiné à retenir un circuit tubulaire pour du fluide caloporteur, une chape flottante et un revêtement.

Le tube retenu sur le treillis est relativement éloigné du revêtement. Le rendement calorifique de l'installation souffre de cet éloignement. Avant de couler la chape, le treillis est exposé et a tendance de soi-même à se relever au pourtour. Ce phénomène peut être accentué par le fait que le poseur marche sur le treillis et le déforme. Les tubes posés sur le treillis ont alors des parties relevées où s'accumulent des bulles d'air, ce qui gêne la circulation du fluide caloporteur et porte préjudice à l'uniformité du chauffage d'une manière d'autant plus grave que toute purge est exclue, puisque le tube est noyé dans la chape.

L'invention pallie ces inconvénients en incorporant à l'installation une structure métallique qui permet d'augmenter le rendement calorifique et de se prémunir des points hauts mieux que jusqu'ici.

L'invention est définie à la partie caractérisante de la revendication 1.

On comprend que cette structure à double plan rapproche le tube du revêtement et résiste mieux aux fléchissements et déformations. L'horizontalité du circuit tubulaire est ainsi mieux assurée.

La fabrication de la structure est simplifiée quand les éléments de liaison font partie du treillis ou de la rangée. Chaque élément de liaison peut être constitué par une partie de l'un du treillis et de la rangée repliée vers l'autre.

De préférence, les parties repliées sont formées en dehors des points de croisement du treillis de manière à ne pas gêner la mise en place des agrafes-supports pour le tube. La section des barres du treillis supérieur peut être plus grande que celles des barres de la rangée inférieure. Suivant une autre variante, les parties repliées des barres de la rangée sont formées aux points de croisement des barres du treillis.

L'invention vise également une agrafe-support adaptée à cette structure telle que définie à la revendication 11.

Grâce à ces deux modes différents de coopération, on peut empêcher tout basculement des agrafes-supports et donc garantir une bonne horizontalité aux tubes qu'elles agrafent. Au DE—A—2.807.446, on décrit une agrafe-support dont la constitution est telle qu'elle peut tourner autour de la barre sur laquelle elle est fixée. Ce basculement est néfaste à l'horizontalité des tubes du circuit de chauffage.

L'invention vise donc également une agrafe-support destinée à agrafer un tube susceptible de véhiculer un fluide de chauffage à la structure conforme aux revendications 7 à 10 et utilisée dans l'installation de chauffage par le sol conforme aux revendications 1 à 6 et comprenant une partie d'agrafage d'un tube par encliquetage au moyen d'une fourche à branches symétriques déformables et une partie destinée à être fixée à la structure par encliquetage qui comporte un premier élément destiné à coopérer avec une barre de la structure suivant une première surface de contact et un second élément qui est destiné à coopérer avec une barre de la structure suivant une seconde surface de contact dirigée ou tournée en sens opposé à la première surface de contact, le premier élément étant destiné à coopérer avec la structure dans un premier plan horizontal et le second élément dans un second plan horizontal inférieur au premier de préférence, et, comme connu en soi par le DE—A—3028102, la partie d'agrafage est montée tournante sur la partie inférieure.

L'un des éléments seulement, de préférence l'élément supérieur, est muni d'un organe d'encliquetage au treillis avec lequel il coopère. La fixation de l'agrafe à la structure est alors bien assurée.

Suivant une variante, les deux éléments s'encliquètent en prenant les barres respectives par des parties opposées. Le montage s'effectue alors par une simple rotation.

Suivant un perfectionnement, la partie inférieure comprend des éléments de coopération avec le treillis, empêchant la partie inférieure de l'agrafe-support de tourner par rapport au treillis.

L'invention vise également une structure métallique, utilisable avantageusement dans l'installation de chauffage par le sol suivant l'invention, mais également à d'autres usages, notamment dans les applications où la structure doit présenter une bonne rigidité. Cette structure est définie à la revendication 7.

D'autres perfectionnements de cette structure sont définis aux sous-revendications 8 à 10. L'agencement prévu à la sous-revendication 10 est particulièrement recommandé car il permet une fabrication en continu de la structure sur une machine à souder automatique, puisque tous les points de soudure sont bien accessibles par le haut aux outils de soudage.

Au brevet français FR—A—2 391 010, on décrit un grillage soudé pour la consolidation de cavités sou-terraines. Ce grillage nee convient pas pour une installation de chauffage par le sol, parce qu'il est peu rigide et parce qu'il ne présente pas des tronçons de barre sensiblement parallèles dans un même plan vertical permettant de poser des agrafes-supports.

La structure décrite au brevet britannique GB—A—221 292 est peu rigide, même dans ses versions les plus rigidifiées. Elle est fastidieuse à fabriquer en raison des ligatures à effectuer manuellement.

Lorsque la partie d'agrafage est montée tour-

2

nante par rapport à un axe vertical, on peut donner au tube agrafé toute direction souhaitée sans le soumettre à des contraintes néfastes.

Au dessin annexé, donné uniquement à titre d'exemple:

la figure 1 est une vue partielle en perspective d'un treillis suivant l'invention sur la partie gauche duquel est montée une agrafe-support,

la figure 2 est une vue partielle en coupe d'une installation de chauffage par le sol,

la figure 3 est une vue en coupe éclatée d'une agrafe-support suivant l'invention,

la figure 4 est une vue de côté éclatée de l'agrafe-support suivant l'invention,

la figure 5 est une vue partielle en perspective d'une installation de chauffage par le sol suivant l'invention comprenant une variante de structure métallique à treillis et d'agrafe-support, alors que celle-ci n'est pas encore encliquetée,

la figure 6 est une vue en élévation de l'agrafe-support de la figure 5 encliquetée sur la structure métallique,

la figure 7 est une vue en élévation de l'agrafe-support de la figure 5, alors qu'elle n'est pas encore encliquetée.

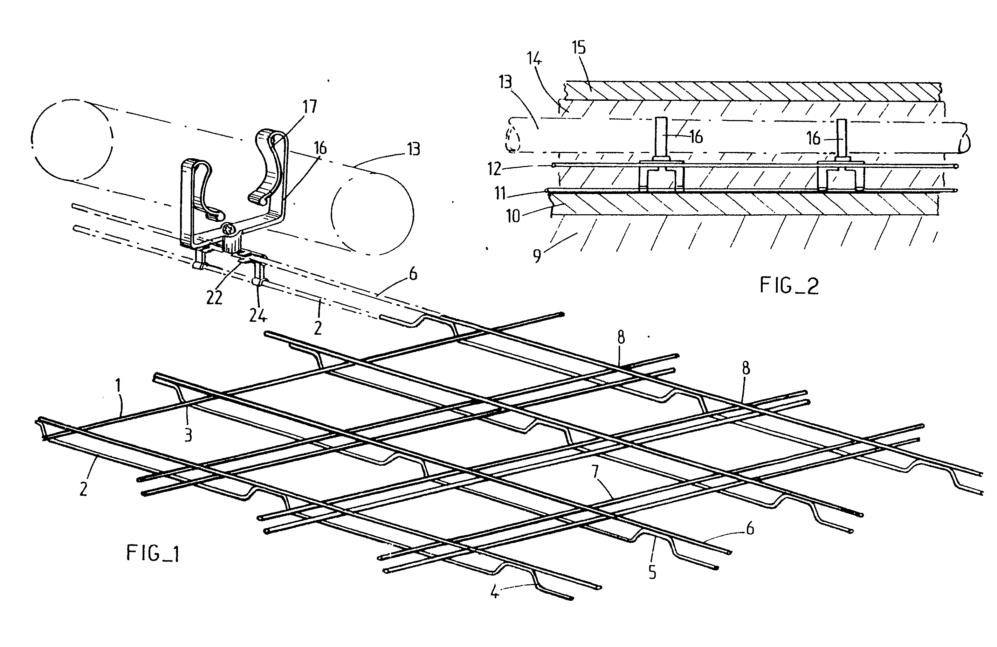

La structure métallique représentée à la figure 1 comprend un treillis inférieur, constitué de barres 1 rectilignes entrecroisées à angle droit avec des barres 2, elles aussi rectilignes, si ce n'est qu'elles présentent, en dehors des points de croisement 3, des parties repliées 4 vers le haut. Les barres 1 et 2 soudées entre elles aux points de croisement 3 définissent un plan horizontal inférieur de la structure.

Les parties repliées 4 sont soudées par leur sommet 5 à des barres 6 rectilignes parallèles aux barres 2. Ces barres 6 constituent avec des barres 7 qui leur sont perpendiculaires un treillis supérieur, définissant un plan horizontal supérieur de la structure. Les barres 7 sont soudées aux barres 6 à leurs points de croisement 8. La section droite des barres 6, 7 du treillis supérieur est plus grande que celle des barres 1, 2 du treillis inférieur, ce qui permet d'économiser de la matière.

L'installation de chauffage suivant l'invention représentée à la figure 2 comprend successivement de bas en haut: une dalle 9, une isolation 10, une pellicule protectrice 11, une structure 12, telle que représentée à la figure 1 et sur laquelle est agrafé à l'aide d'agrafes-supports suivant l'invention un circuit tubulaire 13 parcouru par du fluide caloporteur. La structure 12 et le tube 13 sont noyés dans une chape flottante 14 sur laquelle est placé un revêtement 15.

En raison de la structure particulière à treillis utilisée, le tube 13 est plus près du revêtement 15 que dans les installations classiques, ce qui améliore le rendement calorifique de l'installation de chauffage. Bien que le tube 13 soit surélevé, il est maintenu parfaitement horizontal, car la structure en treillis n'a pas tendance à se relever sur les bords, même si l'on marche dessus lors de la pose du tube 13.

Le tube 13 est agrafé sur la structure en treillis suivant l'invention à l'aide d'agrafes-supports particulières.

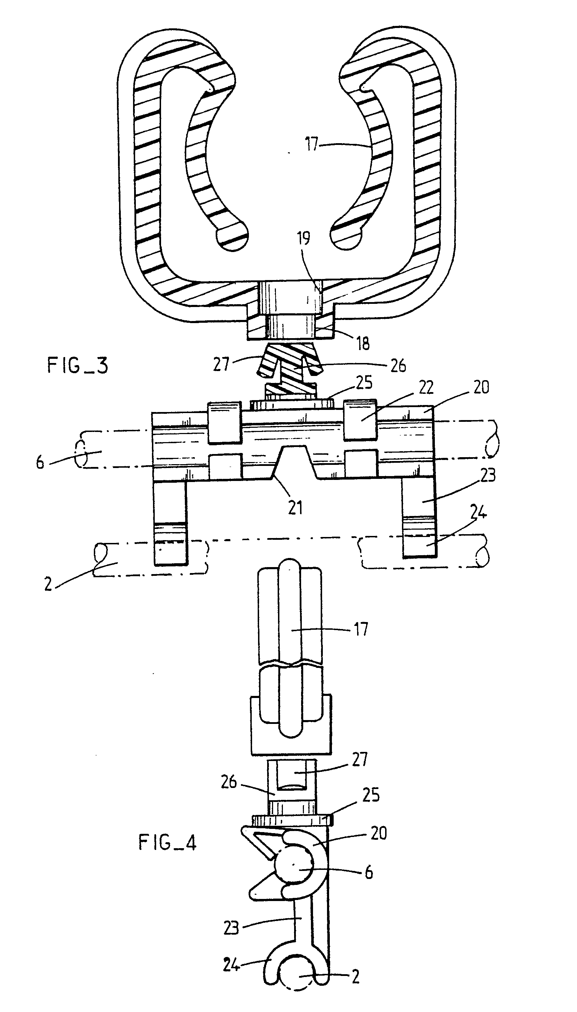

Chaque agrafe-support (figures 3 et 4 et partie gauche de la figure 1) comprend une partie 16 d'agrafage d'un tube 13, qui peut effecter les formes classiques les plus diverses, par exemple à arceaux 17 élastiques, se verrouillant éventuellement, et une partie inférieure coopérant avec la structure en treillis.

La partie d'agrafage 16 comprend une douille à épaulement intérieur séparant deux sections, l'une 18 inférieure et l'autre 19 de plus grand diamètre. Les arceaux 17 s'étendent vers le haut à partir de la section 19 de la douille.

La partie inférieure est d'une seule pièce. Elle comprend un demi-tube 20, ouvert latéralement et encoché en son milieu vers le bas suivant une encoche 21 trapézoïdale à petite base tournée vers le haut. Cette encoche 21 est destinée à recevoir une barre 7. De part et d'autre de l'encoche 21, le demi-tube 20 comporte des éléments d'encliquetage 22 d'une barre dans le demi-tube 20, l'introduction de la barre 6 devant s'effectuer suivant une direction sensiblement horizontale ou du moins par un mouvement de rotation dont le trajet final est sensiblement horizontal. Du bas du demi-tube 20 partent deux pattes 23 terminées en fourche 24 de retenue de l'agrafe-support sur une barre 2. Alors que la surface de contact médiane entre la barre 6 et le demi-tube 20 est sensiblement verticale, la surface de contact médiane entre la barre 2 et la fourche 24 est sensiblement horizontale.

Un disque 25 d'assise fait saillie de la face supérieure du demi-tube 20. Ce disque 25 se prolonge vers le haut par un tourillon 26, d'axe vertical, muni de deux pattes 27 élastiques issues du sommet du tourillon 26 et s'écartant de celui-ci vers le bas. La hauteur de la section 18 est inférieure à la distance entre les extrémités libres des pattes 27 et la face supérieure du disque 25. Le diamètre de la section 18 est juste supérieur à celui du tourillon 26. Lorsque la section 18 est enfilée sur le tourillon 26, les pattes 27 s'écartent à nouveau derrière elle dans la section 19. La partie supérieure est ainsi bien retenue à la partie inférieure, tout en ayant la possibilité de tourner sur celle-ci par rapport à l'axe du tourillon 26.

Pour monter une agrafe-support sur la structure, on en approche les deux fourches 24 latéralement sur une barre 2 et en amenant les deux fourches à califourchon sur l'une des barres 2, on réalise, par ce même mouvement, l'encliquetage du demi-tube 20 sur la barre 6 se trouvant dans le même plan vertical que la barre 2. L'agrafe-support est ainsi non seulement retenue à la structure, mais est empêchée de tourner par rapport à celle-ci, puisque tout mouvement de rotation par rapport à la barre 2 est empêché par la coopération du demi-tube 20 avec la barre 6 et puisque tout mouvement de rotation par rapport à la barre 6 est empêché par la coopération des fourches 24 avec la barre 2.

On monte un tube 13 dans l'agrafe-support à la manière classique, en l'enserrant par les arceaux 17, avec possibilité de faire tourner ceux-ci par rapport à la partie inférieure de l'agrafe-support et donc de suivre sans contrainte toute orientation souhaitée pour le tube dans le plan horizontal.

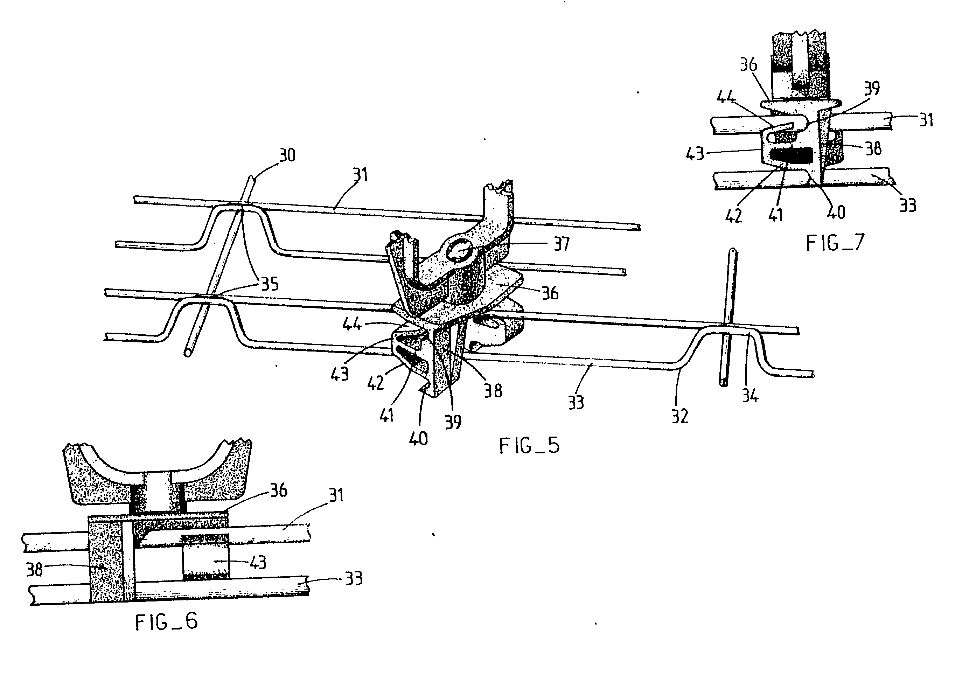

La structure métallique représentée à la figure 5 comprend un treillis supérieur constitué de deux séries de barres 30 et 31 entrecroisées à angle droit et soudées les unes aux autres aux points de croisement. Les barres 30 et 31 définissent un premier plan horizontal de la structure. Une rangée de barres 32 complète la structure. Chaque barre 32 a des tronçons principaux 33. Tous les tronçons 33 sont dans un même plan horizontal inférieur au premier plan. Les barres 32 ont des tronçons repliés 34 entre les tronçons principaux 33. Les tronçons repliés 34 sont soudés à proximité des points de croisement aux barres 31 par leur partie latérale adjacente, chaque barre 32 étant décalée par rapport à la barre 31 correspondante du diamètre d'une barre en sorte que les barres 31 et 32 définissent un plan à peu près vertical, incliné simplement du petit angle dû à ce décalage. Grâce à celui-ci le soudage peut s'effectuer en introduisant un outil de soudage par le haut et en formant des soudures 35 sur les parties latérales adjacentes des barres. La structure peut être ainsi fabriquée sur une machine automatique.

L'agrafe-support des figures 5 à 7 comprend, comme celle des figures 3 et 4, une partie d'agrafage et une partie inférieure. Elle ne se distingue de l'agrafe-support de la figure 3 que par la partie inférieure en forme de fourche.

Cette partie inférieure comprend une platine 36 sensiblement rectangulaire. De la face supérieure de la platine 36 est issu un tourillon 37 qui coopère avec la partie d'agrafage comme à la figure 3. De la face inférieure de la platine 36 partent vers le bas deux branches symétriques l'une de l'autre par rapport à l'axe vertical du tourillon 37.

Chaque branche, dissymétrique en elle-même, par rapport à un plan passant par l'axe vertical 37 de la fourche et par la partie centrale de la branche, comprend une partie 38 verticale ayant une encoche 39 supérieure et une encoche 40 inférieure s'ouvrant latéralement. Entre les encoches 39, 40 s'étendant perpendiculairement à la partie 38 deux voiles supérieur 41 et inférieur 42 reliés à leur extrémité par une portion 43 verticale se prolongeant vers le haut par un bec 44 élastique incliné, revenant devant l'encoche 39. Le bec 44 peut dégager l'encoche 39 en s'abaissant élastiquement, mais la ferme partiellement lorsqu'il revient de soi-même en la position normale d'équilibre.

On monte l'agrafe-support en plaçant la partie entre les deux branches à cheval sur la barre 31 et en la faisant tourner par rapport à un axe vertical de manière à encliqueter la barre 31 dans les deux encoches 39 derrière les becs 44 et à mettre la barre 32 en butée sur les encoches 40.

## Revendications

1. Installation de chauffage par le sol comprenant une structure métallique à treillis posée sur une dalle (9) porteuse et un tube (13) lacé dudessus de la structure et dans lequel circule le fluide de chauffage, agrafé sur la structure à l'aide d'agrafes-supports (16), caractérisée en ce que la structure comprend, outre un premier treillis (6, 7) définissant un plan supérieur, un second treillis (2) définissant un plan inférieur parallèle au plan supérieur formé par le premier treillis (6, 7), les deux treillis étant reliés rigidement entre eux par des éléments de liaison (5), chaque agrafe-support étant fixée à des barres des deux treillis.

2. Installation suivant la revendication 1, caractérisée en ce que les éléments de liaison (5) font partie du premier treillis (6, 7) ou du second treillis (2).

3. Installation suivant la revendication 2, caractérisée en ce qu'un élément de liaison est constitué par une partie du second treillis (2) repliée vers le premier treillis (6, 7).

4. Installation suivant la revendication 3, caractérisée en ce que les parties repliées sont formées en dehors des points de croisement du premier treillis (6, 7).

5. Installation suivant la revendication 3, caractérisée en ce que les parties repliées sont formées aux points de croisement du premier treillis (6, 7).

6. Installation suivant l'une des revendications 1 à 5, caractérisée en ce que la section des barres du premier treillis (6, 7) est plus grande que celle des barres du second treillis (2).

7. Structure métallique utilisée dans l'installation de chauffage par le sol conforme aux revendications 1 à 6 précédentes et comprenant un premier treillis constitué de deux séries de barres (30, 31) entrecroisées, au moins des tronçons de chaque barre de l'une des séries se trouvant dans un même premier plan supérieur, et les barres étant soudées les unes aux autres aux points de croisement, caractérisée en ce qu'il y a, en outre, au moins une rangée de barres, constituant un second treillis, dont des tronçons principaux (33) se trouvent dans une deuxième plan inférieur, parallèle au premier et sont parallèles auxdits tronçons se trouvant dans le premier plan et dont des tronçons pliés et relevés (34) sont décalés latéralement, environ du diamètre d'une barre, respectivement par rapport auxdits tronçons se trouvant dans le premier plan et sont soudés à ces derniers par leur partie latérale en regard.

8. Structure suivant la revendication 7, caractérisée en ce que les barres (30, 31) des séries sont rectilignes.

9. Structure suivant la revendication 7 ou 8, caractérisée en ce que les barres (30, 31) des séries sont entrecroisées à angle droit.

10. Structure suivant l'une des revendications 2 à 9, caractérisée en ce que les barres (30, 31) des rangées sont décalées tout entières du diamètre d'une barre.

11. Agrafe-support destinée à agrafer un tube susceptible devéhiculer un fluide de chauffage à la structure conforme aux revendications 7 à 10 et utilisée dans l'installation de chauffage par le sol conforme aux revendications 1 à 6 précédentes et comprenant une partie d'agrafage (16) d'un tube (13) par encliquetage au moyen d'une fourche à branches symétriques déformables, et une partie destinée à être fixée à la structure par encliquetage qui comporte un premier élément (20) destiné à coopérer avec une barre de la structure suivant une première surface de contact et un second élément (24) qui est destiné à coopérer avec une barre de la structure suivant une seconde surface de contact dirigée ou tournée en sens opposé à la première surface de contact, caractérisée en ce que le premier élément (20) est destiné à coopérer avec la structure dans un premier plan horizontal et le second élément (24) dans un second plan horizontal inférieur au premier.

12. Agrafe-support suivant la revendication 11, caractérisée en ce que les deux surfaces de contact sont perpendiculaires au lieu d'être tournées en sens opposé.

13. Agrafe-support suivant la revendication 11 ou 12, caractérisée en ce que la partie de fixation destinée à coopérer avec la structure (31, 33) comprend une fourche à deux branches (38) symétriques l'une de l'autre par rapport à l'axe de la fourche et individuellement dissymétrique par rapport au plan passant par cet axe et par la partie centrale de la branche.

14. Agrafe-support suivant les revendications 11 à 13 caractérisée en ce que l'un des éléments (20) est muni d'un organe d'encliquetage à la structure.

15. Agrafe-support suivant la revendication 14, caractérisée en ce que chaque branche (38) forme une encoche latérale supérieure (39) et une encoche latérale inférieure (40).

16. Agrafe-support suivant les revendications 13 à 15, caractérisée en ce que chaque branche forme un bec (44) élastique qui, en position normale, ferme l'encoche supérieure (39) et, en position sollicitée, la dégage.

17. Agrafe-support suivant les revendications 11 à 16, caractérisée en ce que la partie d'agrafage (16) est montée tournante sur la partie inférieure, d'une manière connue en soi.

## Patentansprüche

1. Fußbodenheizungsanlage, umfassend eine Metallgitterwerkkonstruktion, die auf einer Trägerplatte (9) ruht, und ein Rohr (13), das über der Konstruktion angeordnet ist und in dem das Heizmedium fließt und das auf der Konstruktion mittels Befestigern (16) festgeklemmt ist, dadurch gekennzeichnet, daß die Konstruktion außer einem ersten Gitterwerk (6, 7), das eine obere Ebene definiert, ein zweites Gitterwerk (2) umfaßt, das eine untere Ebene parallel zur durch das erste Gitterwerk (6, 7) gebildeten Ebene definiert, wobei die beiden Gitterwerke starr miteinander durch Verbindungselemente (5) verbunden sind und jeder Befestiger an den Stäben der beiden Gitterwerke befestigt ist.

2. Anlage nach Anspruch 1, dadurch gekennzeichnet, daß die Verbindungselemente (5) Bestandteil des ersten Gitterwerks (6, 7) oder des zweiten Gitterwerks (2) sind.

3. Anlage nach Anspruch 2, dadurch gekennzeichnet, daß ein Verbindungselement durch einen Teil des zweiten Gitterwerks (2) gebildet wird, das in Richtung des ersten Gitterwerks (6, 7) umgebogen ist.

4. Anlage nach Anspruch 3, dadurch gekennzeichnet, daß die umgebogenen Teile außerhalb der Kreuzungspunkte des ersten Gitterwerks (6, 7) gebildet sind.

5. Anlage nach Anspruch 3, dadurch gekennzeichnet, daß die umgebogenen Teile an der Kreuzungspunkten des ersten Gitterwerks (6, 7) gebildet sind.

6. Anlage nach einem der Ansprüche 1 bis 5, dadurch gekennzeichnet, daß der Querschnitt der Stäbe des ersten Gitterwerks (6, 7) größer ist als der der Stäbe des zweiten Gitterwerks (2)

7. Metallkonstruktion, verwendet in der Fußbodenheizungsanlage gemäß den vorhergehenden Ansprüchen 1 bis 6, umfassend ein erstes Gitterwerk, das aus zwei Gruppen von sich kreuzenden Stäben (30, 31) gebildet ist, wobei sich zumindest Teilstücke jedes Stabs einer der Gruppen in einer gleichen ersten oberen Ebene befinden und die Stäbe miteinander an den Kreuzungspunkten verschweißt sind, dadurch gekennzeichnet, daß außerdem zumindest eine Lage von Stäben vorgesehen ist, die ein zweites Gitterwerk bildet, deren Hauptteilstücke (33) sich in einer zweiten niedrigeren Ebene befinden, die zur ersten parallel zu den Teilstücken verlaufen, die sich in der ersten Ebene befinden und deren gebogene und hochgezogene Teilstücke (34) seitlich ungefähr um den Durchmesser eines Stabs bzw. in bezug auf die Teilstücke, die sich in der ersten Ebene befinden, versetzt und mit diesen durch ihren gegenüberliegenden Seitenteil verschweißt sind.

8. Konstruktion nach Anspruch 7, dadurch gekennzeichnet, daß die Stäbe (30, 31) der Gruppen geradlinig sind.

9. Konstruktion nach Anspruch 7 oder 8, dadurch gekennzeichnet, daß die Stäbe (30, 31) der Gruppen sich im rechten Winkel kreuzen.

10. Konstruktion nach einem der Ansprüche 2 bis 9, dadurch gekennzeichnet, daß die Stäbe (30, 31) der Lagen insgesamt un den Durchmesser eines Stabes versetzt sind.

11. Befestiger zum Festklemmen eines Rohres für den Transport einer Heizflüssigkeit, ausgebildet gemäß den Ansprüchen 7 bis 10 und eingesetzt bei der Fußbodenheizungsanlage gemäß den vorhergehenden Ansprüchen 1 bis 6, umfassend einen Klemmteil (16) zum Festklemmen eines Rohres (13) durch Verklinkung mittels einer Gabel mit symmetrischen elastischen Schenkeln und einen zur Befestigung auf der Konstruktion durch Verklinkung bestimmten Teil, der ein erstes Element (20) umfaßt, das mit einem Stab der Konstruktion an einer ersten Kontaktfläche zusammenwirken soll, und ein zweites Element (24), das mit einem Stab der Konstruktion an einer zweiten Kontaktfläche zusammenwirken soll, die in entgegengesetztem Sinn zur ersten Kontaktfläche gerichtet oder gedreht ist, dadurch gekennzeichnet, daß das erste Element (20) mit der Konstruktion in einer ersten horizontalen Ebene und das zweite Element (24) in einer zweiten horizontalen Ebene, die niedriger als die erste ist, zusammenwirken soll.

12. Befestiger nach Anspruch 11, dadurch gekennzeichnet, daß die beiden Kontaktflächen senkrecht verlaufen anstelle in entgegengesetzem Sinn gedreht zu sein.

13. Befestiger nach Anspruch 11 oder 12, dadurch gekennzeichnet, daß der Befestigungsteil, der mit der Konstruktion (31, 33) zusammenwirken soll, eine Gabel mit zwei Schenkeln (38) umfaßt, die zueinander symmetrisch in bezug auf die Achse der Gabel und individuell asymmetrisch in bezug auf die Ebene sind, die durch diese Achse und den Mittelteil des Schenkels geht.

14. Befestiger nach den Ansprüchen 11 bis 13, dadurch gekennzeichnet, daß das eine der Elemente (20) mit einem Organ zur Verklinkung mit der Konstruktion versehen ist.

15. Befestiger nach Anspruch 14, dadurch gekennzeichnet, daß jeder Schenkel (38) eine obere seitliche Einkerbung (39) und eine untere seitliche Einkerbung (40) bildet.

16. Befestiger nach den Ansprüchen 13 bis 15, dadurch gekennzeichnet, daß jeder Schenkel eine elastische Nase (44) bildet, die in Normalposition die obere Einkerbung (39) absperrt und sie in der Belastungsposition freigibt.

17. Befestiger nach den Ansprüchen 11 bis 16, dadurch gekennzeichnet, daß der Klemmteil (16) in an sich bekannter Weise drehbar auf dem unteren Teil angebracht ist.

**Claims**

1. Under-floor heating installation comprising a metal grid or mesh structure placed on a support surface (9) and a tube (13) placed above the structure, in which the heating fluid circulates, this tube (13) being secured to the structure by means of support clips (16), characterised in that the structure comprises, in addition to a first grid (6, 7) defining an upper plane, a second grid (2) defining a lower plane parallel to the upper plane formed by the first grid (6, 7), the two grids being rigidly connected to each other by linking elements (5), each support clip being fixed to bars of both grids.

2. Installation as claimed in claim 1, characterised in that the linking elements (5) are part of the first grid (6, 7) or of the second grid (2).

3. Installation as claimed in claim 2, characterised in that a linking element consists of part of the second grid (2) bent round towards the first grid (6, 7).

4. Installation as claimed in claim 3, characterised in that the bent portions are formed away from the points of intersection of the first grid (6, 7).

5. Installation as claimed in claim 3, characterised in that the bent portions are formed at the points of intersection of the first grid (6, 7).

6. Installation as claimed in one of claims 1 to 5, characterised in that cross section of the bars of the first grid (6, 7) is greater than that of the bars of the second grid (2).

7. Metal structure used in the under-floor heating installation as claimed in claims 1 to 6 hereinbefore and comprising a first grid consisting of two series of intersecting bars (30, 31) with at least portions of each bar of one series being located in the same first upper plane, and the bars being welded to one another at the points of intersection, characterised in that there is also at least one row of bars constituting a second grid, the main portions (33) of which are located in a second lower plane parallel to the first and are parallel to the portions located in the first plane and have folded and raised portions (34) which are laterally offset, approximately by the diameter of a bar, relative to the portions located in the first plane, respectively, and are welded to the latter by means of their lateral facing part.

8. Structure as claimed in claim 7, characterised in that the bars (30, 31) in the series are rectilinear.

9. Structure as claimed in claim 7 or 8, characterised in that the bars (30, 31) of the series intersect at right angles.

10. Structure as claimed in one of claims 2 to 9, characterised in that the bars (30, 31) of the rows are offset entirely by the diameter of a bar.

11. Support clip intended to clip a tube capable of carrying a heating fluid to the structure as claimed in claims 7 to 10 and used in the under-floor heating installation as claimed in claims 1 to 6 hereinbefore and comprising a fixing portion (16) of a tube (13), which operates by latching using a fork with deformable symmetrical arms, and a part intended to be fixed to the structure by latching, which comprises a first element (20) adapted to cooperate with a bar of the structure along a first contact surface and a second element (24) which is intended to cooperate with a bar of the structure along a second contact surface directed or facing in the opposite direction from the first contact surface, characterised in that the first element (20) is intended to cooperate with the structure in a first horizontal plane and the second element (24) in a second horizontal plane below the first.

12. Support clip as claimed in claim 11, characterised in that the two contact surfaces are perpendicular, instead of facing in opposite directions.

13. Support clip as claimed in claim 11 or 12, characterised in that the fixing portion intended to cooperate with the structure (31, 33) comprises a fork with two arms (38) which are symmetrical with each other relative to the axis of the fork and individually asymmetrical relative to the plane passing through this axis and through the centre part of the arm.

14. Support clip as claimed in claims 11 to 13, characterised in that one of the elements (20) is provided with means for latching to the structure.

15. Support clip as claimed in claim 14, characterised in that each arm (38) forms an upper lateral notch (39) and a lower lateral notch (40).

16. Support clip as claimed in claims 13 to 15 characterised in that each arm forms a flexible stud (44) which, in the normal position, closes the upper notch (39) and, in the stressed position, releases it.

17. Support clip as claimed in claims 11 to 16, characterised in that the fixing portion (16) is rotatably mounted on the lower part, in a manner known *per se*.

FIG_2

FIG_1

0 107 558

FIG_3

FIG_4

2

0 107 558

FIG_7

FIG_5

FIG_6

3